# FASCICULE DE BREVET EUROPEEN

(11) **EP 3 197 722 B1**
(45) Date de publication et mention de la délivrance du brevet: **12.09.2018**
(21) Numéro de dépôt: 15787653.3
(22) Date de dépôt: 17.09.2015
(51) Int. Cl.: B60R 5/04, B60N 2/36, B60R 13/01

(54) **AGENCEMENT D'UN PLANCHER A L'INTERIEUR D'UN COFFRE DE VEHICULE AUTOMOBILE COMPORTANT DES SIEGES ESCAMOTABLES**
ANORDNUNG EINES BODENS IN EINEM GEPÄCKABLAGEFACH EINES KRAFTFAHRZEUGS MIT ZURÜCKZIEHBAREN SITZEN
ARRANGEMENT OF A FLOOR INSIDE A LUGGAGE COMPARTMENT OF A MOTOR VEHICLE COMPRISING RETRACTABLE SEATS

(30) Priorité: 24.09.2014 FR 1459024
(43) Date de publication de la demande: 02.08.2017
(73) Titulaire: Renault S.A.S., 92100 Boulogne-Billancourt (FR)
(72) Inventeur: JOSSE, Pascal, F-78500 Sartrouville (FR); RICHARDSON, Diamella, F-78990 Elancourt (FR)
(86) Numéro de dépôt international: PCT/FR2015/052490
(87) Numéro de publication internationale: WO 2016/046473

(56) Documents cités:
- EP-A1- 2 698 281
- EP-A2- 1 498 304
- WO-A1-2010/015085
- WO-A1-2014/064054
- DE-A1-102010 052 455
- DE-C1- 19 957 380
- DE-U1- 20 107 762
- FR-A1- 2 856 965
- GB-A- 656 932
- GB-A- 2 111 918
- JP-A- 2000 025 526
- US-B1- 6 290 277

## Description

L'invention concerne un agencement d'un plancher de chargement à l'intérieur d'un coffre de véhicule automobile comportant des sièges escamotables entre une position d'utilisation et une position rangée dans laquelle le dossier des sièges (16) est dans le prolongement du plancher, le coffre étant délimité par des parois latérales, par la rangée de sièges escamotables à l'avant et par une porte de coffre à l'arrière, le plancher comportant un panneau avant, situé en arrière de la rangée de sièges et présentant un bord avant et un bord arrière transversaux, et un panneau arrière présentant un bord avant et un bord arrière transversaux, situé en avant de la porte de coffre.

Selon la cinématique d'escamotage des sièges, il peut être nécessaire de prévoir un débattement suffisant pour que les sièges puissent passer d'une position à l'autre. Cela peut être le cas, par exemple des cinématiques impliquant une translation de l'assise du siège vers l'arrière. Ce débattement nécessaire entraine alors des inconvénients d'un point de vue qualité perçue. En effet, lorsque les sièges sont en position d'utilisation, c'est-à-dire lorsque le dossier du siège est relevé en position verticale, un jeu important apparait entre le bord avant du panneau avant et le bord inférieur du dossier de siège, ce qui est inesthétique. De plus, des objets et des poussières risquent de s'infiltrer dans cet espace.

En outre cette zone du véhicule présente de nombreuses contraintes car il est de plus nécessaire que le plancher et les sièges escamotés forment une zone plane à la fois esthétique et pratique, car la zone de rangement, souvent présente sous le plancher, doit rester accessible.

Le document DE 10 2010 052 455 A1 décrit un agencement d'un plancher de chargement à l'intérieur d'un coffre de véhicule automobile selon le préambule de la revendication 1. Afin de pallier ces inconvénients, l'invention a pour objet un agencement d'un plancher de chargement à l'intérieur d'un coffre de véhicule automobile qui soit à la fois esthétique et pratique, que les sièges soient en position d'utilisation ou rabattus.

A cet effet, l'invention propose un agencement d'un plancher de chargement à l'intérieur d'un coffre de véhicule automobile du type cité ci-dessus, comprenant les caractéristiques de la revendication 1. Selon d'autres caractéristiques de l'invention:
- Chaque cavité est ménagée dans une extrémité arrière et sous la face supérieure de la garniture latérale en débouchant dans une paroi latérale et dans une paroi arrière de l'élément de garniture, chaque cavité étant formée d'une paroi supérieure et inférieure et étant apte à recevoir la zone d'accrochage du panneau avant de façon que la garniture latérale et le panneau avant forment une surface plane.
- Le montage entre la zone d'accrochage et la cavité est serré.
- Un bord avant du panneau arrière est monté à rotation autour d'un axe transversal porté par un bord arrière du panneau avant, entre une position horizontale dans laquelle il est dans le prolongement du panneau avant et une position relevée d'accès à un espace situé sous le plancher de chargement.
- Le bord arrière du panneau arrière est en appui sur une barre de seuil du coffre.
- Le jeu entre le bord avant du panneau avant et le dossier du siège lorsqu'il est en position d'utilisation est au maximum de 10 millimètres.
- L'articulation entre le panneau avant et le panneau arrière du plancher est constituée par une charnière film.
- Une face arrière des dossiers des sièges comporte un évidement apte à recevoir le panneau avant lorsque les sièges sont en position escamotée de façon que la face arrière des sièges et le plancher forment une surface plane.

D'autres caractéristiques et avantages de l'invention apparaîtront à la lecture de la description d'exemples de réalisation un plancher de chargement de coffre en référence aux dessins annexés dans lesquels :
- La figure 1 est une vue générale de dessus d'un agencement d'un plancher de chargement selon l'invention.
- La figure 2 est une vue en perspective d'un détail de l'agencement
- La figure 3 est une vue latérale en coupe selon le plan III-III de la figure 1 dans laquelle un siège est représenté en traits pointillés en position d'utilisation et en traits pleins en position escamotée.
- La figure 4 est une vue latérale en coupe selon le plan IV-IV de la figure 2.

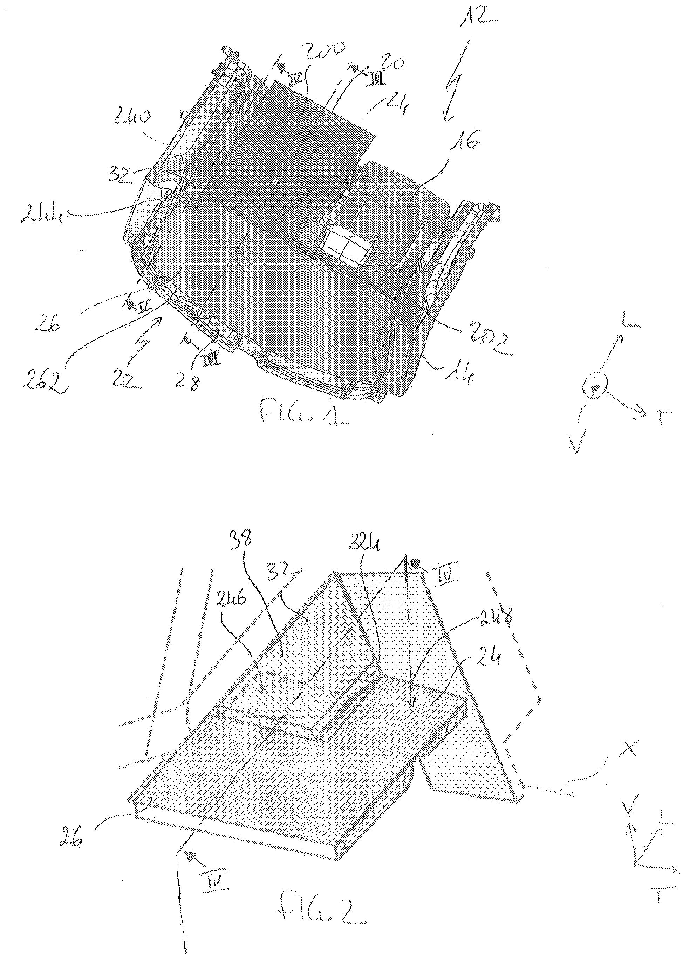

Dans la description qui suit, nous prendrons à titre non limitatif une orientation longitudinale, verticale et transversale indiquée par le trièdre L,V,T des figures 1 à 4.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 1, un véhicule automobile comporte un coffre 12 délimité par des parois latérales 14, par une rangée de sièges 16 à l'avant et par une porte de coffre (non représentée) à l'arrière.

Les sièges 16 sont escamotables entre une position d'utilisation dans laquelle leurs dossiers 20 sont en position sensiblement verticale et une position escamotée dans laquelle les dossiers 20 sont en position rabattue.

Un plancher de chargement 22 est agencé à l'intérieur du coffre 12.

Il est formé d'un panneau avant 24 et d'un panneau arrière 26.

Le panneau avant 24 présente un bord avant 240 jouxtant la rangée de siège 16, un bord arrière 242 et des bords latéraux 244.

Le panneau arrière 26 présente un bord avant 260 et un bord arrière 262 porté par une barre de seuil de coffre 28.

Le bord avant 260 du panneau arrière 26 est monté à rotation autour d'un axe transversal X porté par un bord arrière 242 du panneau avant 24.

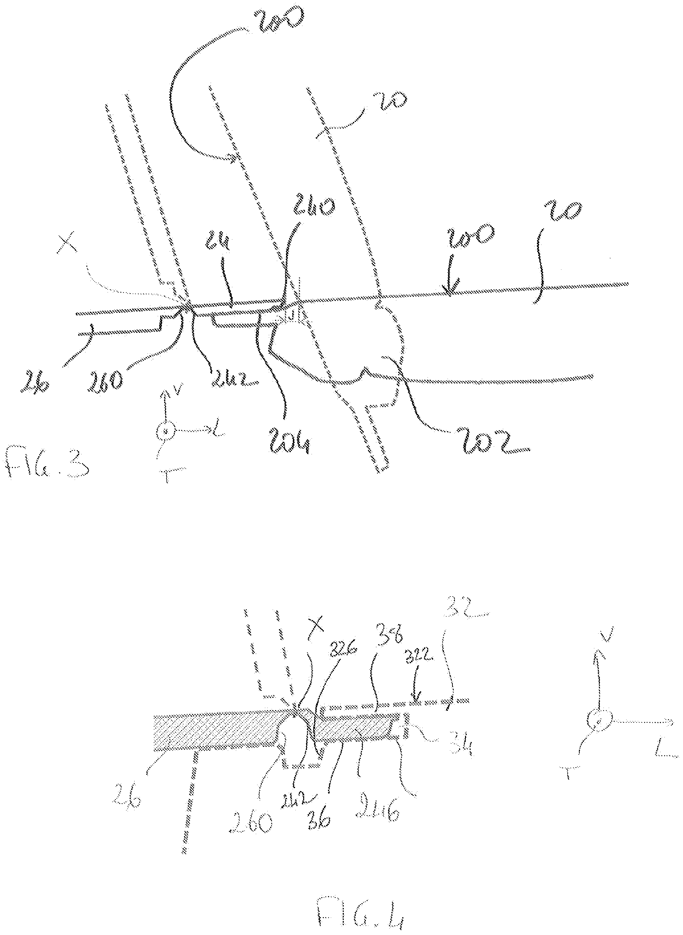

Tel que représenté aux figures 2 et 4, les bords latéraux 244 du panneau avant 24 présentent chacun une zone d'accrochage 246 apte à coopérer avec des moyens de support 34 localisés sur des éléments de garniture latéraux 32 portés par les parois latérales 14 du coffre 12 et situés dans le prolongement du plancher de chargement 22. Les éléments de garnitures latéraux 32 s'étendent sur au moins une partie de la longueur des parois latérales 14, en particulier, le long des sièges 16 et en arrière de ces derniers.

La zone d'accrochage 246 est formée par une portion d'extrémité du panneau avant 24 s'étendant depuis le bord latéral 244, formant un renfoncement par rapport à une face supérieure 248 du panneau avant 24.

La zone d'accrochage 246 peut ainsi être formée, par exemple, par une diminution de l'épaisseur du panneau avant 24 au niveau de la portion d'extrémité formant la zone d'accrochage 246 ou bien par une déformation du plan du panneau avant 24 de la portion d'extrémité formant la zone d'accrochage 246, le plan de la zone d'accrochage 246 se trouvant alors dans un plan inférieur au plan général du panneau avant 24.

Tel que représenté à la figure 4, une extrémité arrière 320 des éléments de garniture latéraux 32 présente une cavité 34 formée sous la face sensiblement horizontale supérieure 322 desdits éléments 32. La cavité 34, qui présente une paroi de fond inférieure 36 et une paroi supérieure 38, débouche dans une face latérale intérieure 324 et dans une face arrière d'extrémité 326 de l'élément de garniture 32.

La cavité 34 est destinée à recevoir la zone d'accrochage 246 du panneau avant 24 selon un montage serré.

Les dimensions de la cavité 34 et de la zone d'accrochage 246 sont prévues pour que, lorsque le panneau avant 24 est maintenu par les moyens de support 34 portés par les éléments de garniture latéraux 32, le panneau avant 24 et les éléments de garniture 32 forment une surface sensiblement plane, les faces supérieures 322 et 248 se situant dans le prolongement l'une de l'autre.

Une fois les zones d'accrochage 246 emprisonnées dans les cavités 34, le panneau avant 24 est solidement maintenu et ne risque pas de s'échapper de manière intempestive. De plus, le montage étant serré, les risques de vibrations sont réduits.

L'axe transversal X reliant les panneaux avant 24 et arrière 26, qui se trouve en arrière de l'extrémité 320 des éléments de garniture 32, est de type charnière film, la charnière étant alors constituée par exemple par une moquette formée d'une pièce recouvrant à la fois les deux panneaux 24 et 26.

Lorsque le plancher 22 est en place, les zones d'accrochage 246 du panneau avant 24 sont dissimulées sous les éléments de garniture latéraux 32 et les extrémités latérales du panneau arrière 26 s'étendent dans le prolongement des éléments de garniture latéraux 32, en arrière de ceux-ci.

Tel que représenté à la figure 3, lorsque le siège 16, représenté en traits pointillés, est en position d'utilisation dans laquelle le dossier 20 est relevé, il existe un jeu J entre le bord avant 240 du panneau avant 24 et la face arrière 200 du dossier 20. Ce jeu est réduit et est au maximum de l'ordre de 10 millimètres environ.

Lorsque le dossier 200 est rabattu en position sensiblement horizontale, une partie inférieure 202 du dossier 20 de siège 16 vient se positionner sous le panneau avant 24 qui conserve sa position horizontale en appui sur les supports latéraux 34,36. Le panneau 24 est alors en appui contre une portion 204 de la face arrière 200 du dossier 20. Cette portion 204 de dossier 20 est de préférence formée par un évidement de forme complémentaire de celle du panneau avant 24 de façon que la face arrière 200 du dossier 20 et le panneau avant 24 forment une surface plane lorsque le dossier 20 est rabattu.

Ainsi, quelle que soit la position du siège 16, le panneau avant 24 conserve toujours sa position horizontale.

Lorsque le plancher de chargement 22 est maintenu dans les supports latéraux 34 et la barre de seuil 28, il est alors possible, quelle que soit la position des sièges 16, d'accéder au volume situé sous le plancher 22 en soulevant le panneau arrière 26 qui va alors effectuer une rotation autour de l'axe transversal X, le panneau avant 24 restant en position horizontale.

Le plancher de chargement 22 est également facilement amovible puisqu'il suffit de soulever le panneau arrière 26 pour le libérer de la barre de seuil 28 et de faire glisser vers l'arrière du véhicule le panneau avant 24 pour le libérer des supports latéraux 34.

L'invention permet ainsi de disposer d'un plancher de chargement pratique et offrant une surface de chargement plane lorsque les sièges sont escamotés qui présente également l'avantage d'améliorer la qualité perçue du plancher de chargement tout en ne nécessitant pas de modifications importantes de l'environnement du plancher de chargement.

## Revendications

1. Agencement d'un plancher de chargement (22) à l'intérieur d'un coffre (12) de véhicule automobile comportant des sièges escamotables (16) entre une position d'utilisation et une position rangée dans laquelle le dossier (20) des sièges (16) est dans le prolongement du plancher (22), le coffre (12) étant délimité par des parois latérales (14), par la rangée de sièges escamotables (16) à l'avant et par une porte de coffre à l'arrière, le plancher (22) comportant un panneau avant (24), situé en arrière de la rangée de sièges (16) et présentant un bord avant (240) et un bord arrière (242) transversaux, et un panneau arrière (26) présentant un bord avant (260) et un bord arrière (262) transversaux, situé en avant de la porte de coffre, le panneau avant (24) étant en appui sur une portion (204) d'une face arrière (200) du dossier (20) lorsque les sièges (16) sont en position escamotée, des moyens de support (34) de zones d'accrochage (246) du panneau avant (24) étant prévus sur des éléments de garnitures (32) portés par les parois latérales (14) de coffre (12), les zones d'accrochage (246) étant formées par une portion d'extrémité du panneau avant (24) s'étendant depuis un bord latéral (244) dudit panneau (24), **caractérisé en ce que,** quelle que soit la position des sièges (16), le panneau avant (24) est en position horizontale, son bord avant (240) étant disposé le long du dossier (20) des sièges (16) lorsque les sièges (16) sont en position d'utilisation, et le panneau avant (24) étant en appui sur une portion (204) d'une face arrière (200) du dossier (20) lorsque les sièges (16) sont en position escamotée, les moyens de support (34) étant constitués par des cavités (34) ménagées dans les éléments de garniture (32) portés par les parois latérales (14) du coffre (12) venant dans le prolongement du plancher (22) en position horizontale, chaque cavité recevant une zone d'accrochage (246) du panneau avant (24).

2. Agencement d'un plancher (22) à l'intérieur d'un coffre (12) de véhicule automobile selon la revendication précédente, **caractérisé en ce que** chaque cavité (34) est ménagée dans une extrémité arrière (320) et sous la face supérieure (322) de la garniture latérale (32) en débouchant dans une paroi latérale (324) et dans une paroi arrière (326) de l'élément de garniture (32), chaque cavité (34) étant formée d'une paroi supérieure (38) et inférieure (36) et étant apte à recevoir la zone d'accrochage (246) du panneau avant (24) de façon que la garniture latérale (32) et le panneau avant (24) forment une surface plane.

3. Agencement d'un plancher (22) à l'intérieur d'un coffre (12) de véhicule automobile selon la revendication précédente, **caractérisé en ce que** le montage entre la zone d'accrochage (246) et la cavité (34) est serré.

4. Agencement d'un plancher (22) à l'intérieur d'un coffre (12) de véhicule automobile selon l'une des revendications précédentes, **caractérisé en ce qu'**un bord avant (260) du panneau arrière (26) est monté à rotation autour d'un axe transversal (X) porté par un bord arrière (242) du panneau avant (24) entre une position horizontale dans laquelle il est dans le prolongement du panneau avant (24) et une position relevée d'accès à un espace situé sous le plancher de chargement (22).

5. Agencement d'un plancher (22) à l'intérieur d'un coffre (12) de véhicule automobile selon l'une des revendications précédentes, **caractérisé en ce que** le bord arrière (262) du panneau arrière (26) est en appui sur une barre de seuil (28) du coffre (12).

6. Agencement d'un plancher (22) à l'intérieur d'un coffre (12) de véhicule automobile selon la revendication 1, **caractérisé en ce que** le jeu (J) entre le bord avant (240) du panneau avant (24) et le dossier (20) du siège (16) lorsqu'il est en position d'utilisation est au maximum de 10 millimètres.

7. Agencement d'un plancher (22) à l'intérieur d'un coffre (12) de véhicule automobile selon l'une des revendications 5 à 7, **caractérisé en ce que** l'articulation entre le panneau avant (24) et le panneau arrière (26) du plancher (22) est constituée par une charnière film.

8. Agencement d'un plancher (22) à l'intérieur d'un coffre de véhicule automobile selon l'une des revendications 1 à 8, **caractérisé en ce que** la face arrière (200) des dossiers (20) des sièges (16) comporte un évidement (204) apte à recevoir le panneau avant (24) lorsque les sièges (16) sont en position escamotée de façon que la face arrière (200) des dossiers (20) de siège et le plancher (22) forment une surface plane.

## Patentansprüche

1. Anordnung eines Ladebodens (22) in einem Kofferraum (12) eines Kraftfahrzeugs, umfassend zurückziehbare Sitze (16) zwischen einer Verwendungsposition und einer Ladeposition, in der die Rückenlehne (20) der Sitze (16) in der Verlängerung des Bodens (22) ist, wobei der Kofferraum (12) von Seitenwänden (14), von zurückziehbaren Sitzreihe (16) vorne und von einem Kofferraumdeckel hinten begrenzt ist, wobei der Boden (22) eine vordere Platte (24), die sich hinter der Sitzreihe (16) befindet und einen vorderen Rand (240) und einen hinteren Rand (242), die quer verlaufen, aufweist, und eine hintere Platte (26), die einen vorderen Rand (260) und einen hinteren Rand (262), die quer verlaufen, aufweist, die sich vor dem Kofferraumdeckel befindet, umfasst, wobei die vordere Platte (24) auf einem Abschnitt (204) einer Rückseite (200) der Rückenlehne (20) aufliegt, wenn die Sitze (16) in zurückgezogener Position sind, wobei Stützmittel (34) von Befestigungszonen (246) der vorderen Platte (24) auf Verkleidungselementen (32), die von den Seitenwänden (14) des Kofferraums (12) getragen werden, vorgesehen sind, wobei die Befestigungszonen (246) von einem Endabschnitt der vorderen Platte (24) gebildet sind, der sich von einem Seitenrand (244) der Platte (24) aus erstreckt,
**dadurch gekennzeichnet, dass**
unabhängig von der Position der Sitze (16) die vordere Platte (24) in horizontaler Position ist, wobei ihr vorderer Rand (240) entlang der Rückenlehne (20) der Sitze (16) angeordnet ist, wenn die Sitze (16) in Verwendungsposition sind, und wobei die vordere Platte (24) auf einem Abschnitt (204) einer Rückseite (200) der Rückenlehne (20) aufliegt, wenn die Sitze (16) in der zurückgezogenen Position sind, wobei die Stützmittel (34) von Hohlräumen (34) gebildet sind, die in den Verkleidungselementen (32), die von den Seitenwänden (14) des Kofferraums (12) getragen werden, vorgesehen sind, die in die Verlängerung des Bodens (22) in horizontaler Position gelangen, wobei jeder Hohlraum eine Befestigungszone (246) der vorderen Platte (24) aufnimmt.

2. Anordnung eines Bodens (22) in einem Kofferraum (12) eines Kraftfahrzeugs nach dem vorhergehenden Anspruch, **dadurch gekennzeichnet, dass** jeder Hohlraum (34) in einem hinteren Ende (320) und unter der Oberseite (322) der Seitenverkleidung (32) vorgesehen ist, wobei er in eine Seitenwand (324) und in eine Rückwand (326) des Verkleidungselements (32) mündet, wobei jeder Hohlraum (34) von einer oberen (38) und einer unteren (36) Wand gebildet und geeignet ist, die Befestigungszone (246) der vorderen Platte (24) aufzunehmen, so dass die Seitenverkleidung (32) und die vordere Platte (24) eine ebene Fläche bilden.

3. Anordnung eines Bodens (22) in einem Kofferraum (12) eines Kraftfahrzeugs nach dem vorhergehenden Anspruch, **dadurch gekennzeichnet, dass** die Montage zwischen der Befestigungszone (246) und dem Hohlraum (34) fest ist.

4. Anordnung eines Bodens (22) in einem Kofferraum (12) eines Kraftfahrzeugs nach einem der vorhergehenden Ansprüche, **dadurch gekennzeichnet, dass** ein vorderer Rand (260) der hinteren Platte (26) drehbar um eine Querachse (X), die von einem hinteren Rand (242) der vorderen Platte (24) getragen wird, zwischen einer horizontalen Position, in der er in der Verlängerung der vorderen Platte (24) ist, und eine angehobenen Zugangsposition zu einem Raum, der sich unter dem Ladeboden (22) befindet, montiert ist.

5. Anordnung eines Bodens (22) in einem Kofferraum (12) eines Kraftfahrzeugs nach einem der vorhergehenden Ansprüche, **dadurch gekennzeichnet, dass** der hintere Rand (262) der hinteren Platte (26) auf einer Schutzleiste (28) des Kofferraums (12) aufliegt.

6. Anordnung eines Bodens (22) in einem Kofferraum (12) eines Kraftfahrzeugs nach Anspruch 1, **dadurch gekennzeichnet, dass** das Spiel (J) zwischen dem vorderen Rand (240) der vorderen Platte (24) und der Rückenlehne (20) des Sitzes (16), wenn er in Verwendungsposition ist, höchstens 10 Millimeter beträgt.

7. Anordnung eines Bodens (22) in einem Kofferraum (12) eines Kraftfahrzeugs nach einem der Ansprüche 5 bis 7, **dadurch gekennzeichnet, dass** das Gelenk zwischen der vorderen Platte (24) und der hinteren Platte (26) des Bodens (22) von einem Filmscharnier gebildet ist.

8. Anordnung eines Bodens (22) in einem Kofferraum eines Kraftfahrzeugs nach einem der Ansprüche 1 bis 8, **dadurch gekennzeichnet, dass** die Rückseite (200) der Rückenlehnen (20) der Sitze (16) eine Ausnehmung (204) umfasst, die geeignet ist, die vordere Platte (24) aufzunehmen, wenn die Sitze (16) in zurückgezogener Position sind, so dass die Rückseite (200) der Rückenlehnen (20) der Sitze und der Boden (22) eine ebene Fläche bilden.

## Claims

1. Arrangement of a loading floor (22) inside a luggage compartment (12) of a motor vehicle comprising seats (16) that can be retracted between a usage position and a stowed position in which the backrest (20) of the seats (16) is in the extension of the floor (22), the luggage compartment (12) being delimited by side walls (14), by the row of retractable seats (16) at the front and by a luggage compartment door at the rear, the floor (22) comprising a front panel (24) located behind the row of seats (16) and having a transverse front edge (240) and a transverse rear edge (242), and a rear panel (26) having a transverse front edge (260) and a transverse rear edge (262) and located in front of the luggage compartment door, the front panel (24) bearing against a portion (204) of a rear face (200) of the backrest (20) when the seats (16) are in the retracted position, the front panel (24) bearing against a portion (204) of a rear face (200) of the backrest (20) when the seats (16) are in the retracted position, means (34) for supporting attachment zones (246) of the front panel (24) being provided on trim elements (32) carried by the side walls (14) of the luggage compartment (12),
the attachment zones (246) being formed by an end portion of the front panel (24) extending from a side edge (244) of said panel (24),
**characterized in that**, irrespective of the position of the seats (16), the front panel (24) is in the horizontal position, its front edge (240) being arranged along the backrest (20) of the seats (16) when the seats (16) are in the usage position, and the front panel (24) bearing against a portion (204) of a rear face (200) of the backrest (20) when the seats (16) are in the retracted position, the support means (34) being formed by cavities (34) arranged in the trim elements (32) carried by the side walls (14) of the luggage compartment (12) and lying in the extension of the floor (22) in the horizontal position, each cavity receiving an attachment zone (246) of the front panel (24).

2. Arrangement of a floor (22) inside a luggage compartment (12) of a motor vehicle according to the preceding claim, **characterized in that** each cavity (34) is arranged in a rear end (320) and below the upper face (322) of the side trim (32), opening into a side wall (324) and into a rear wall (326) of the trim element (32), each cavity (34) being formed by an upper wall (38) and a lower wall (36) and being able to receive the attachment zone (246) of the front panel (24), such that the side trim (32) and the front panel (24) form a flat surface.

3. Arrangement of a floor (22) inside a luggage compartment (12) of a motor vehicle according to the preceding claim, **characterized in that** the mounting between the attachment zone (246) and the cavity (34) is tight.

4. Arrangement of a floor (22) inside a luggage compartment (12) of a motor vehicle according to one of the preceding claims, **characterized in that** a front edge (260) of the rear panel (26) is mounted in rotation about a transverse axis (X) carried by a rear edge (242) of the front panel (24) between a horizontal position in which it lies in the extension of the front panel (24) and a raised position giving access to a space situated below the loading floor (22).

5. Arrangement of a floor (22) inside a luggage compartment (12) of a motor vehicle according to one of the preceding claims, **characterized in that** the rear edge (262) of the rear panel (26) bears on a threshold bar (28) of the luggage compartment (12) .

6. Arrangement of a floor (22) inside a luggage compartment (12) of a motor vehicle according to Claim 1, **characterized in that** the play (J) between the front edge (240) of the front panel (24) and the backrest (20) of the seat (16) when it is in the usage position is maximum 10 millimeters.

7. Arrangement of a floor (22) inside a luggage compartment (12) of a motor vehicle according to one of Claims 5 to 7, **characterized in that** the articulation between the front panel (24) and the rear panel (26) of the floor (22) is formed by a film hinge.

8. Arrangement of a floor (22) inside a luggage compartment of a motor vehicle according to one of claims 1 to 8, **characterized in that** the rear face (200) of the backrests (20) of the seats (16) comprises a recess (204) able to receive the front panel (24) when the seats (16) are in the retracted position, such that the rear face (200) of the backrests (20) of the seat and the floor (22) form a flat surface.
